# EUROPÄISCHE PATENTSCHRIFT

(11) **EP 1 804 226 B1**
(45) Veröffentlichungstag und Bekanntmachung des Hinweises auf die Patenterteilung: **20.02.2013**
(21) Anmeldenummer: 06125950.3
(22) Anmeldetag: 12.12.2006
(51) Int. Cl.: G08G 1/0968, G01C 21/34, G08G 1/01, G08G 1/123

(54) **Verfahren zur Übertragung von Routeninformationen**
Method for route information transmission
Procédé pour transmettre des informations routières

(30) Priorität: 03.01.2006 DE 102006000643
(43) Veröffentlichungstag der Anmeldung: 04.07.2007
(73) Patentinhaber: ROBERT BOSCH GMBH, 70442 Stuttgart (DE)
(72) Erfinder: Hinrichs, Andreas, 31199 Diekholzen (DE)

(56) Entgegenhaltungen:
- EP-A- 0 755 039
- EP-A- 0 902 406
- EP-A- 1 381 009
- DE-A1- 10 131 526
- DE-A1- 10 146 117

## Beschreibung

Die vorliegende Erfindung betrifft ein Verfahren zum Übertragen von zum Reproduzieren einer von einem Navigationssystem berechneten Route geeigneten Informationen von einem eine Routenberechnung ausführenden Navigationssystem an eine Zentrale zur Weiterverarbeitung.

Eine derartige Routeninformationsübertragung ist dann erforderlich, wenn zumindest zwei verschiedene Einrichtungen für ihre Funktionalität auf eine bzw. die gleiche Route zurückgreifen. In der DE 103 43 486 A1 wird beispielsweise ein System zum Vermitteln von Mitfahrgelegenheiten oder Transportdienstleistungen zwischen mehreren Teilnehmern beschrieben. Die Teilnehmer unterteilen sich einerseits in Anbieter, die einem Dienstserver eine Route und ihre Transportkapazität mitteilen, und andererseits in Interessenten, die dem Dienstserver eine Route mitteilen, für die sie eine Mitnahmemöglichkeit suchen. Aus dem Angebot und der Nachfrage übereinstimmender Routenabschnitte ordnet der Dienstserver die Teilnehmer einander zu, indem der Dienstserver die ihm von den Teilnehmern übertragenen Routen weiterverarbeitet.

Eine andere Anwendung ist die Erfassung von der aktuellen Verkehrslage durch Verkehrsteilnehmer in einem Verkehrsnetz, um die Verkehrsteilnehmer in dem Verkehrsnetz so zu verteilen, dass Staus und Behinderungen möglichst vermieden werden können. Die derart ermittelten Daten werden als "Floating-Car-Daten" (FCD) bezeichnet, da im Gegensatz zu bisherigen stationären Messpunkten, die nur eine Querschnittsinformation liefern, die Geräte zur FCD-Erfassung mobil sind und mit dem Verkehr "fließen". Diese in ein Fahrzeug installierte Kombination aus Navigations- und Kommunikationseinheit ermittelt über ein satellitengestütztes System, beispielsweise das Globale Positions-System (GPS), Zeit und Position des Fahrzeugs und sendet alle Informationen laufend an eine Zentralstelle, in der die gesamte Datenmenge entsprechend weiterverarbeitet wird.

Bei derartigen Systemen gibt ein Nutzer vor Beginn der Fahrt sein gewünschtes Ziel in sein Mobiltelefon bzw. Handy ein, das als Offboard-Navigationssystem agiert.

Offboard-Navigation bedeutet, dass nicht das Mobiltelefon selbst die Route berechnet, sondern eine von der Zentrale berechnete Route an das Mobiltelefon übermittelt wird. Weiterhin wird für einzelne Streckenabschnitte die erwartete Fahrzeit übermittelt.

Während der Fahrt erfolgt automatisch und ohne Aktivität des Fahrers ein Abgleich zwischen der zentral berechneten und der tatsächlichen Fahrzeit. Abweichungen hiervon werden zurück an die Zentrale gemeldet. Dort kann somit das durch andere bekannte Quellen, beispielsweise Detektoren oder Ganglinien, ermittelte Bild der Verkehrslage durch die von den Mobiltelefonen gesammelten Informationen verifiziert, ergänzt und verbessert werden. Wenn ein Nutzer eine Strecke besonders häufig fährt, nimmt er durch diese Regelmäßigkeit Einfluss auf das hinterlegte Ganglinienprofil. Um Nutzern von Onboard-Navigationssystemen denselben Service zu bieten, müssen diese ihre von dem mobilen Navigationssystem selbst berechneten Routen der Servicezentrale bekannt machen und übermitteln.

Die Übermittlung der Fahrtroute an die Servicezentrale kann sowohl über drahtlose als auch drahtgebunden Übertragungstechniken erfolgen. Bei einer drahtlosen Übermittlung, beispielsweise mittels GSM, GPRS und/oder UMTS fallen dabei im Allgemeinen große Datenmengen und damit hohe Kosten an.

Die EP 0 902 406 A2 beschreibt ein Verfahren zur Übertragung von Wegedaten. Dabei wird zur Verringerung des zu übertragenden Datenvolumens die Route polygonzugartig in "Kanten" aufgeteilt. Diese Kanten werden anschließend nach einem bestimmten Algorithmus zu "Teilwegen" zusammengefasst.

Die EP 1 381 009 A2 beschreibt ein Verfahren zur Aktualisierung von Routendaten, wobei zur Stützstellen der Route übermittelt werden.

Vor diesem Hintergrund ist es die Aufgabe der vorliegenden Erfindung, ein Verfahren bereitzustellen, das die für die Übermittlung von Routeninformationen zu übertragende Datenmenge und damit auch die entstehenden Kosten möglichst effektiv reduziert.

Diese Aufgabe wird von einem Verfahren mit den Merkmalen des Anspruchs 1 gelöst. Die wesentliche Idee der Erfindung besteht darin, nicht die Route selbst von dem Navigationssystem zu der Zentrale zu übermitteln, sondern lediglich die Informationen, die erforderlich sind, um die Route in der Zentrale erneut zu berechnen. Ziel hierbei ist es, die Datenmenge möglichst gering zu halten, jedoch ausreichend Information zu übertragen, so dass die von der Zentrale nachberechnete bzw. reproduzierte Route der von dem Navigationssystem berechneten Route entspricht.

Damit unterschiedliche Navigationssysteme verwendet werden können, weist in einer bevorzugten Ausführungsform des erfindungsgemäßen Verfahrens die Teilinformation Angaben zu einem bei der Berechnung verwendeten Algorithmus auf. Dadurch kann sichergestellt werden, dass die Berechnung weitestgehend identisch durchgeführt wird, da die Zentrale den Algorithmus kennt und somit gemäß der gleichen Rechenvorschriften die Routenberechnung durchführen kann.

In vorteilhafter Weise kann die Teilinformation Angaben zu einer Streckenlänge und/oder Fahrtdauer der in dem Navigationssystem berechneten Route und/oder Abfahrts- und Ankunftszeiten aufweisen. Anhand dieser Informationen kann in der Zentrale durch Vergleich der entsprechenden Angaben überprüft werden, ob die beiden berechneten Routen identisch sind.

Weiterhin kann eine Überprüfung der Identität der beiden berechneten Routen erfolgen, wenn, wie in einem bevorzugten erfindungsgemäßen Verfahren vorgesehen, die Teilinformation zusätzlich Angaben zu auf der Route befindlichen Zwischenkoordinaten aufweist.

Ferner bevorzugt weist die Teilinformation bei einem erfindungsgemäßen Verfahren Angaben zu berücksichtigten Verkehrsmeldungen auf. Dadurch wird sichergestellt, dass bei den beiden einzeln durchgeführten Routenberechnungen die gleichen Randbedingungen berücksichtigt werden.

Um bei den Routenberechnungen möglichst gleiche Randbedingungen zugrunde zu legen, kann weiterhin in vorteilhafter Weise die Teilinformation Angaben zu nutzerspezifischen Einstellungen aufweisen. Diese Einstellungen können beispielsweise die Auswahl, ob die schnellste (Zeit) oder die kürzeste (Strecke) Route berechnet wird. Weiterhin können die nutzerspezifischen Einstellungen die bevorzugten Straßen mit jeweiligen Durchschnittsgeschwindigkeitswerten oder eine Vermeidung von Tunnel oder Fähren und/oder Orten aufweisen.

Das erfindungsgemäße Verfahren sieht vor, dass die Teilinformation eine eindeutige Identifikation der Route aufweist. Bei regelmäßig verwendeten Routen kann diesen beispielsweise eine Identifikationsnummer zugeordnet werden, die in der Servicezentrale gespeichert wird. Anschließend ist lediglich diese Identifikationsnummer zu übertragen, um die Route eindeutig zu bestimmen, da in der Zentrale die der Identifikationsnummer zugeordneten Routendaten abgelegt und abrufbar sind.

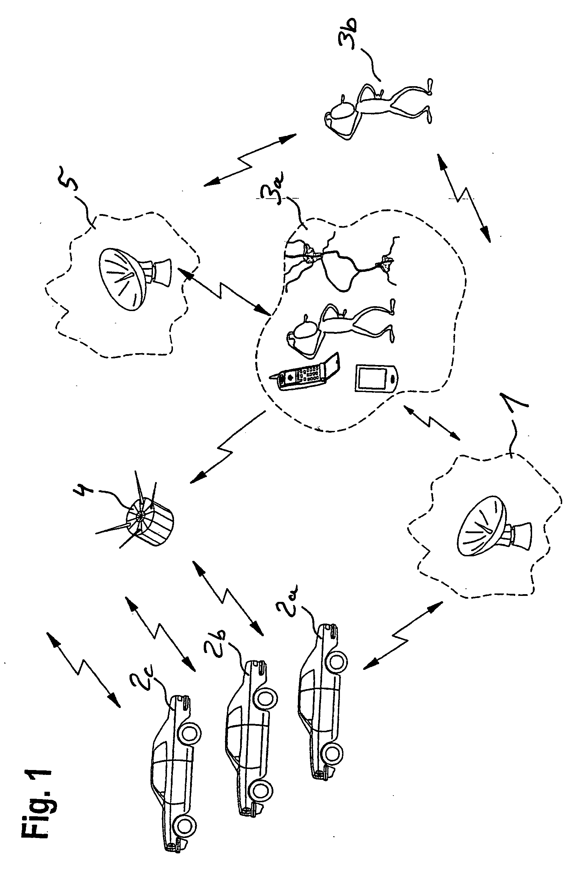

Nachfolgend wird die vorliegende Erfindung anhand eines Anwendungsbeispiels unter Bezugnahme auf die Figur 1 beispielhaft näher erläutert. Hierbei zeigt
- Figur 1 -: schematisch ein Anwendungsbeispiel für das erfindungsgemäße Verfahren.

In Figur 1 ist schematisch die Struktur eines Systems zur Vermittlung von Mitfahrgelegenheiten und Transportdienstleistungen mit zumindest einer ortsfesten Zentrale 1 und einer Vielzahl von Teilnehmern 2a, 2b, 2c, 3a und 3b dargestellt. Die Teilnehmer unterteilen sich einerseits in so genannte Anbieter 2a, 2b und 2c, die eine Dienstleistung, beispielsweise die Mitfahrgelegenheit oder Transportmöglichkeit, anbieten, um Personen und/oder Güter zu befördern. Dies können beispielsweise Taxiunternehmen und/oder Speditionen sein. Andererseits enthält die Gruppe der Teilnehmer so genannte Interessenten 3a und 3b, die eine Transportmöglichkeit für sich selbst und/oder andere Personen oder Güter suchen. Die Anzahl der Zentrale 1, der Anbieter 2a, 2b und 2c sowie der Interessenten 3a und 3b ist nicht auf die im Beispiel angegebene Anzahl beschränkt.

In den Fahrzeugen der Anbieter 2a, 2b und 2c ist jeweils ein Onboard-Navigationssystem (nicht dargestellt) installiert, das satellitengestützt eine Positionsbestimmung durchführt. D. h., es empfängt Signaldaten von Satelliten 4 eines mehrere Satelliten umfassenden Systems, beispielsweise GPS oder Galileo. Anhand der satellitengestützten Positionsbestimmung und der Zielangabe berechnet das jeweilige Onboard-Navigationssystem eine Route für den entsprechenden Teilnehmer 2a, 2b und 2c. Anschließend werden die berechneten Routen betreffende Routeninformationen an die Zentrale 1 übermittelt.

Die Interessenten 3a, 3b sind mit einem mobilen Endgerät, beispielsweise ein PDA oder ein Mobiltelefon, ausgestattet. Die Positionsbestimmung der Interessenten 3a und 3b kann zum einen satellitengestützt oder über eine in einzelne Zellen unterteilte Infrastruktur 5 eines Mobilfunk-Netzbetreibers erfolgen.

Damit die Zentrale 1 die für Beförderungen angebotenen Routen mit den von den Interessenten 3a und 3b gesuchten Routen vergleichen kann, ist es erforderlich, dass die Zentrale 1 sowohl die Routen der Anbieter 2a, 2b und 2c als auch eine Routeninformation der Interessenten 3a und 3b kennt. Hier reicht es aus, dass von den Interessenten 3a bzw. 3b Start- und Zielvorgaben der Zentrale 1 übermittelt werden, d.h. auf der Seite der Interessenten 3a und 3b ist keine Routenberechnung erforderlich. Die Zentrale 1 kann anhand dieser Angaben überprüfen, ob angebotene Routen die Start-/Zielvorgaben eines Interessenten 3a bzw. 3b berühren.

Alternativ können die Interessenten 3a bzw. 3 b aber auch eine Routeinformation einer bereits berechneten Route übermitteln, so dass die Zentrale 1 sowohl die Routen der Anbieter 2a, 2b und 2c als auch eine Routeninformation der Interessenten 3a und 3b kennt. Hier reicht es aus, dass von den Interessenten 3a bzw. 3b Start- und Zielvorgaben der Zentrale 1 übermittelt werden, d.h. auf der Seite der Interessenten 3a und 3b ist keine Routenberechnung erforderlich. Die Zentrale 1 kann anhand dieser Angaben überprüfen, ob angebotene Routen die Start-/Zielvorgaben eines Interessenten 3a bzw. 3b berühren.

Alternativ können die Interessenten 3a bzw. 3b aber auch eine Routeninformation einer bereits berechneten Route übermitteln, so dass die Zentrale 1 diese Route nachberechnen und reproduzieren kann. Damit die Datenmenge der zu übertragenen Routeninformation nicht zu groß wird, wird von den Teilnehmern nicht die vollständige Routeninformation an die Zentrale 1 übertragen, sondern lediglich zum Reproduzieren der berechneten Route geeigneten Informationen.

Anhand dieser übertragenen Informationen reproduziert die Zentrale 1 selber die entsprechenden Routen. Die von der Zentrale 1 nachberechneten Routen der unterschiedlichen Teilnehmer, der Anbieter 2a, 2b und 2c sowie gegebenenfalls der Interessenten 3a und 3b, können nun miteinander in der Zentrale verglichen werden, um entsprechende Mitfahrgelegenheiten oder Beförderungskapazitäten den Teilnehmern zu vermitteln.

Die erfindungsgemäß vorgesehenen die Route betreffenden übertragenen Informationen weisen eine möglichst geringe Datenmenge auf, damit die bevorzugt drahtlose Übertragung kostengünstig erfolgen kann. Es muss dabei aber sichergestellt sein, dass in der Zentrale die gleiche, identische Route nachberechnet wird. Die minimale Anforderung für eine Nachberechnung der Route ist die Übermittlung der Start- und Zielkoordinaten. Da die auf dem Markt befindlichen, unterschiedlichen Navigationssysteme verschiedener Hersteller zur Routenberechnung auf unterschiedliche Algorithmen zurückgreifen, berechnen die Navigationssysteme zum Teil unterschiedliche Routen für Fahrten mit den gleichen Start/Zielvorgaben.

Deshalb enthalten die übermittelten Informationen eine Angabe des verwendeten Algorithmus. Die Zentrale 1 greift entsprechend der empfangenen Informationen auf den entsprechenden Algorithmus zu, um bei der Nachberechnung der Route zu demselben Ergebnis zu gelangen. Um weitere Abweichungen zu vermeiden, wenn das mobile Navigationssystem und die Zentrale 1 auf voneinander abweichendes Kartenmaterial zugreifen, kann der Zentrale zusätzlich die Versionsnummer der mobil gespeicherten Karte bzw. der Karten-CD und/oder DVD übermittelt werden.

Weitere Angaben, durch die die Berechnung einer Route deutlich beeinflusst wird, sind die nutzerspezifischen Einstellungen, ob beispielsweise die streckenmäßig betrachtet kürzeste Route oder eine zwar längere, aber eine kürzere Fahrzeit beanspruchende Alternativroute berechnet wird. Ferner kann der Nutzer beispielsweise mautpflichtige Straßen, Brücken oder Tunnel auf der Route vermeiden wollen.

Im Prinzip wird in der Zentrale das mobile Navigationssystem simuliert, um die Route reproduzieren zu können. Von Bedeutung ist, dass die Datenmenge der übermittelten Informationen mit den entsprechenden Angaben zur Routenberechnung nicht die Datenmenge der berechneten Route übersteigt.

In einem weiteren Anwendungsbeispiel können von mobilen Verkehrsteilnehmern Zeit- und Positionswerte an eine Zentrale übermittelt werden, die die eingehenden Verkehrsinformationen möglichst vieler Teilnehmer zu einer Verkehrslage zusammenfasst. Anhand der Verkehrslage kann ein Teil der Teilnehmer Fahrempfehlungen erhalten, um belastete Abschnitte eines Verkehrsnetzes vermeiden zu können. So kann die Zentrale 1 beispielsweise feststellen, wenn die Zentrale 1 die Route des Teilnehmers 2a kennt, ob aufgrund der Verkehrslage entlang dieser Route ein Stau oder eine Behinderung droht, um gegebenenfalls dem Teilnehmer 2a eine Umleitungsempfehlung zu übermitteln.

## Patentansprüche

1. Verfahren zum Übertragen von Teilinformationen, die zum Reproduzieren einer von einem Navigationssystem berechneten Route geeignet sind, von einem eine Routenberechnung ausführenden Navigationssystem an eine Zentrale zur Weiterverarbeitung,
wobei der berechneten Route Teilinformationen zugeordnet werden, anhand derer die berechnete Route reproduzierbar ist,
die Teilinformationen von dem Navigationssystem an die Zentrale übertragen werden und
anschließend die Route in der Zentrale reproduziert wird,
**dadurch gekennzeichnet, dass**
regelmäßig verwendeten Routen eine Identifikationsnummer zugeordnet wird, die in der Servicezentrale gespeichert wird, und diese Identifikationsnummer als Teilinformation übertragen wird.

2. Verfahren nach Anspruch 1, **dadurch gekennzeichnet, dass** die übertragenen Teilinformationen Angaben zu einem bei der Berechnung verwendeten Algorithmus aufweisen.

3. Verfahren nach Anspruch 1 oder 2, **dadurch gekennzeichnet, dass** die übertragenen Teilinformationen Angaben zu einer Streckenlänge und einer Fahrtdauer der Route und/oder Abfahrts- und Ankunftszeiten aufweisen.

4. Verfahren nach einem der vorstehenden Ansprüche, **dadurch gekennzeichnet, dass** die übertragenen Teilinformationen Angaben zu auf der Route befindlichen Zwischenkoordinaten aufweisen.

5. Verfahren nach einem der vorstehenden Ansprüche, **dadurch gekennzeichnet, dass** die übertragenen Teilinformationen Angaben zu berücksichtigten Verkehrsmeldungen aufweisen.

6. Verfahren nach einem der vorstehenden Ansprüche, **dadurch gekennzeichnet, dass** die übertragenen Teilinformationen Angaben zu nutzerspezifischen Einstellungen aufweisen.

## Claims

1. Method for transmitting information elements which are suitable for reproducing a route calculated by a navigation system from a navigation system performing route calculation to a control centre for further processing,
wherein the calculated route is assigned information elements which can be used to reproduce the calculated route,
the information elements are transmitted from the navigation system to the control centre, and
the route is then reproduced in the control centre,
**characterized in that**
regularly used routes are assigned an identification number which is stored in the service control centre, and this identification number is transmitted as an information element.

2. Method according to Claim 1, **characterized in that** the transmitted information elements have statements relating to an algorithm used for the calculation.

3. Method according to Claim 1 or 2, **characterized in that** the transmitted information elements have statements relating to a section length and a journey duration for the route and/or departure and arrival times.

4. Method according to one of the preceding claims, **characterized in that** the transmitted information elements have statements relating to intermediate coordinates situated on the route.

5. Method according to one of the preceding claims, **characterized in that** the transmitted information elements have statements relating to traffic reports taken into consideration.

6. Method according to one of the preceding claims, **characterized in that** the transmitted information elements have statements relating to user-specific settings.

## Revendications

1. Procédé de transmission d'informations partielles, appropriées pour la reproduction d'un itinéraire calculé par un système de navigation, d'un système de navigation effectuant un calcul d'itinéraire à un central à des fins de traitement ultérieur,
dans lequel on associe à l'itinéraire calculé des informations partielles sur la base desquelles l'itinéraire calculé peut être reproduit,
les informations partielles sont transmises au central par le système de navigation et
l'itinéraire est finalement reproduit dans le central,
**caractérisé en ce qu'**on associe à des itinéraires utilisés régulièrement un numéro d'identification qui est mémorisé dans le central de service et **en ce que** ce numéro d'identification est transmis en tant qu'information partielle.

2. Procédé selon la revendication 1, **caractérisé en ce que** les informations partielles transmises comprennent des indications concernant un algorithme utilisé lors du calcul.

3. Procédé selon la revendication 1 ou 2, **caractérisé en ce que** les informations partielles transmises comprennent des indications concernant une longueur de trajet et un temps de trajet de l'itinéraire et/ou des instants de départ et d'arrivée.

4. Procédé selon l'une quelconque des revendications précédentes, **caractérisé en ce que** les informations partielles transmises comprennent des indications concernant des coordonnées intermédiaires se trouvant sur l'itinéraire.

5. Procédé selon l'une quelconque des revendications précédentes, **caractérisé en ce que** les informations partielles transmises comprennent des informations de circulation devant être prises en considération.

6. Procédé selon l'une quelconque des revendications précédentes, **caractérisé en ce que** les informations partielles transmises comprennent des indications concernant des réglages propres à l'utilisateur.
